# EUROPÄISCHE PATENTSCHRIFT

(11) **EP 2 610 181 B1**
(45) Veröffentlichungstag und Bekanntmachung des Hinweises auf die Patenterteilung: **22.01.2014**
(21) Anmeldenummer: 11010225.8
(22) Anmeldetag: 27.12.2011
(51) Int. Cl.: B65B 11/00, G06Q 30/02, B65B 61/02, B41J 11/00, B41J 13/00, B65B 59/00

(54) **Verfahren zum Individualisieren von Kartons durch einen Aufddruck**
Method for customising cartons with an overprint
Procédé d'individualisation de cartons par une surimpression

(43) Veröffentlichungstag der Anmeldung: 03.07.2013
(73) Patentinhaber: Flooring Technologies Ltd., Pieta PTA 9044 (MT)
(72) Erfinder: Lehnhoff, Ingo, 18347 Dierhagen (DE)
(74) Vertreter: Rehmann, Thorsten

(56) Entgegenhaltungen:
- WO-A2-2007/074412
- US-A- 5 430 992
- US-A- 5 810 487
- US-A1- 2010 017 305
- US-A1- 2010 294 690

## Beschreibung

Die Erfindung betrifft ein Verfahren zum Individualisieren von Kartons durch einen Aufdruck.

Aus der EP 1 925 573 B1 ist ein Verfahren zum Kommissionieren von Waren bekannt, bei dem eine definierte Anzahl identischer Produkte in neutrale Behälter eingelegt wird und die neutralen Behälter dann zu jeweils einem Gebinde gesammelt werden. In Folge eines spezifischen Auftrages wird dann eine Mehrzahl von mit den Produkten befüllter neutraler Behälter aus mindestens einem Gebinde zu einer Kommission zusammengeführt. Anschließend wird jeder neutrale Behälter der Kommission mit den zu dem Auftrag gehörigen Daten beschriftet und/oder bedruckt, wobei mindestens eine Seite des Behälters über ein Digitaldruckwerk beschriftet und/oder bedruckt wird. Durch dieses Verfahren erfolgt die Individualisierung der Waren für einen spezifischen Kundenauftrag nicht wie ansonsten üblich vor dem Einlagern, sondern erst nachdem der Kundenauftrag vorliegt. Dadurch wird die Lagerhaltung wesentlich vereinfacht, weil keine individualisierten Einheiten unabhängig von der aktuellen Nachfrage gelagert werden müssen.

Aus der US 5,810,487 A ist es bekannt, Kartonzuschnitte im Produktionsprozess unmittelbar zu bedrucken, bevor die Produkte eingefüllt werden. Die Produkte und die Kartonzuschnitte werden über verschiedene Fördereinrichtungen zu einer Verpackungsstation gefördert. Dort werden die Produkte dann auf die Kartonzuschnitte aufgelegt, diese dann aufgerichtet und verschlossen.

Es ist also insgesamt bekannt, Kartons, die mit Produkten befüllt werden oder bereits befüllt sind, zu einem möglichst späten Zeitpunkt durch einen Aufdruck zu individualisieren. Wenn diese Produkte dann vom Hersteller zum Kunden, der nicht zwingend der Endabnehmer ist, transportiert werden sollen, werden die einzelnen Produktkartons dann auf Paletten gestapelt und auf diesen sicher befestigt. Hierzu werden entweder Bänder um den Stapel herumgelegt und die einzelnen Kartons miteinander verzurrt oder die Palette wird mit Folie umhüllt.

In aller Regel werden die einzelnen Kartons auf der Palette in einer identischen Ausrichtung übereinander und nebeneinander aufgestapelt, sodass sich das Gesamtbild jeder Seitenfläche des Stapels aus einer Vielzahl identischer Einzelbilder zusammensetzt, die sich in der Höhe und der Breite in Abhängigkeit von der Anzahl der Kartons wiederholen.

Ausgehend von der aus der EP 1 925 573 B1 bekannten reduzierten Lagerhaltung verschiedener Kartonvarianten soll für die zu einem Gebinde oder zu einer Kommission zusammengestellten Produktverpackungen eine zusätzliche Werbemöglichkeit geschaffen werden, die die unregelmäßige Gestaltung der Seitenflächen der aufgestapelten Kartons in ihrer Gesamtheit vermeidet und somit eine optisch ansprechende Einheit ergibt.

Zur Problemlösung erfolgt das Individualisieren der Kartons durch einen Aufdruck mit folgenden Verfahrensschritten:
a) Auswählen einer Mehrzahl von zu bedruckenden Kartonzuschnitten,
b) Auswählen mindestens einer zu bedruckenden Fläche auf je einem Kartonzuschnitt,
c) Aufteilen eines Druckbildes in eine Mehrzahl von Einzelbildern gleicher oder unterschiedlicher Größe,
d) Zuordnen eines jeden Einzelbildes zu mindestens einer Fläche auf je einem Kartonzuschnitt,
e) Bedrucken der jeweils ausgewählten Fläche mit dem zugeordneten Einzelbild mittels eines Tintenstrahldruckers,
f) Aufrichten und Verkleben jedes bedruckten Zuschnittteiles zu einem Karton,
g) Einfüllen mindestens eines Produktes in jeden aufgerichteten Karton,
h) Verschließen jedes befüllten Kartons,
i) Anordnen der verschlossenen Kartons in horizontaler und vertikaler Richtung, sodass die mit jeweils einem Einzelbild bedruckten Flächen der Kartons so aneinander angrenzen, dass das Druckbild wieder vollständig sichtbar ist.

Durch dieses Verfahren kann die Verpackung nicht nur nach dem Produktinhalt durch einen Barcode oder dergleichen und/oder Herstellerangaben individualisiert werden, sondern es wird ein Gesamtbild an den Seitenflächen eines Gebindes, das die Form eines Quaders oder Würfels hat, der aus einzelnen Kartons besteht, die auf einer Palette abgestapelt wurden, erzeugt, das sich aus einer Vielzahl Einzelbilder zusammensetzt. Für den Betrachter sehen die Seitenkanten des Quaders aber einheitlich oder unterschiedlich aus, sodass das Gebinde an sich, wenn es zum Verkauf in dem Ladenlokal bereitgestellt wird, für den Kunden einen "Eye-Catcher", also einen Hingucker, bildet, was den Kaufanreiz erhöhen kann.

Vorzugsweise ist zusätzlich zu jedem Einzelbild auf jeder für das Einzelbild ausgewählten Fläche mindestens ein das in den Karton eingelegte Produkt kennzeichnendes Symbol aufgedruckt. Dies kann ein Barcode sein.

Um das Bedrucken zu vereinfachen und die aufgetragene Farbschicht möglichst dünn halten zu können, ist die Farbe der zu bedruckenden Kartonzuschnitte vorzugsweise weiß.

Insbesondere vorzugsweise wird jeder Kartonzuschnitt so bedruckt, dass der aufgerichtete Karton an zumindest drei Seitenflächen bedruckt ist.

Als Druckvorrichtung wird mindestens ein Tintenstrahldrucker eingesetzt. Die Produkte die in die Kartons eingelegt werden, sind vorzugsweise Paneele, insbesondere Fußbodenpaneele, aus einem Holzwerkstoff.

Durch das erfindungsgemäße Verfahren werden die Verpackungsvarianten im Herstellerbetrieb reduziert. Gleichzeitig werden Verluste an individualisierten Verpackungskartons bei Auslauf einer Produktvariante vermieden, und durch Anpassung des Aufdrucks auf die Verpackung, insbesondere bei Sortimentsumstellung oder bei Aktionen, kann der Herstellbetrieb schnell auf Kundenwünsche reagieren. Durch das direkte Bedrucken der Verpackungskartons mit Produktspezifikation und/oder Barcode können Etikettenautomaten und Etiketten eingespart werden. Dadurch werden nicht nur die Lagerkosten, sondern auch die Herstellkosten reduziert. Durch die "übergroße" Fläche, die durch die Vielzahl der neben- und übereinander angeordneten Kartons gebildet wird, wird eine zusätzliche Werbemöglichkeit geschaffen.

Mit Hilfe einer Zeichnung soll ein Ausführungsbeispiel der Erfindung nachfolgend näher beschrieben werden.

Es zeigt:
- Figur 1 -: eine erste Seitenfläche eines aus mehreren aufgestapelten Kartons bestehenden Gebindes,
- Figur 2 -: eine zweite Seitenfläche des Gebindes gemäß Sichtpfeil II nach Figur 1.

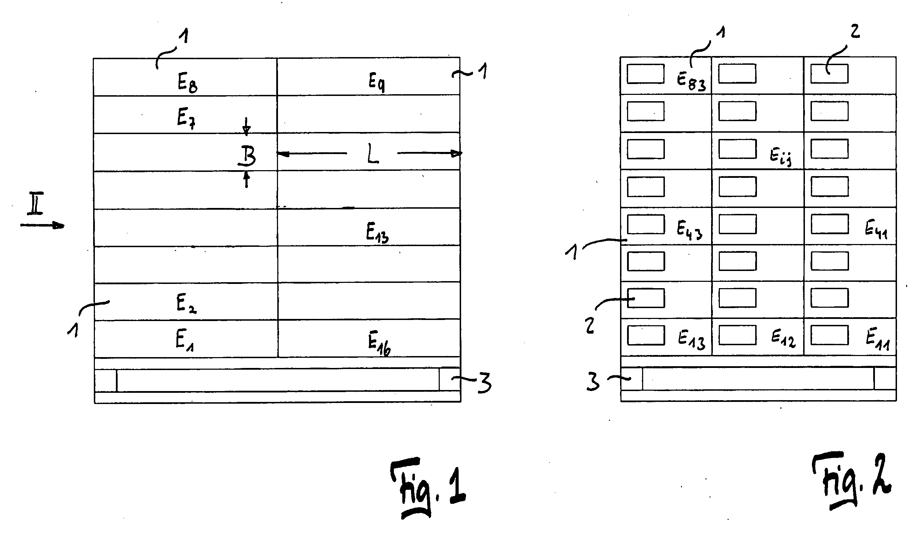

Wie Figur 1 zeigt, sind auf der Palette acht einzelne Kartons 1 übereinander und in zwei Reihen nebeneinander aufeinander gestapelt. Figur 2 zeigt, dass auf der Palette 3 drei Reihen Kartons 1 hintereinander angeordnet sind, sodass sich als Gebinde ein Quader mit insgesamt 48 Kartons 1 ergibt. Um die Seitenflächen des Gebindes zu individualisieren, wird bei dem Beispiel gemäß Figur 1 ein für die Seitenfläche gewünschtes Gesamtbild in 16 Einzelbilder Eᵢ aufgeteilt, wobei jedes Einzelbild E₁, E₂, ... Eᵢ, ..., E₁₆ eine Größe hat, die der Länge L und der Breite B eines Kartons 1 entspricht. Da vorher bekannt ist, wie viele Kartons 1 zu einem Gebinde zusammengefasst werden, erfolgt die Aufteilung der Einzelbilder Eᵢ individuell und jeder einzelne Karton 1 wird entsprechend seiner später in dem Gebinde vorgesehenen Lage mit einem für ihn individualisiertem Einzelbild E₁, E₂, ... Eᵢ, ..., E₁₆ bedruckt. Entsprechend werden auch die Stirnflächen (vgl. Figur 2) mit einem individualisierten Bild bedruckt. Hier würde das Gesamtbild dann in 24 Einzelbilder E₁₁, E₁₂, .. Eᵢⱼ, ..., E₈₃ aufgeteilt und jeder Karton 1 mit dem für ihn aufgrund seiner vorgesehenen Lage innerhalb des Gebindes ausgewählten Einzelbild Eᵢⱼ bedruckt.

Zusätzlich kann jeder Karton 1 mit einem zusätzlichen Aufdruck 2, beispielsweise einem Barcode bedruckt werden, um den Inhalt der einzelnen Kartons 1 erkennbar zu machen oder den Hersteller bzw. Verkäufer zu kennzeichnen. Nachdem die einzelnen Kartons 1 dann entsprechend der für sie individualisierten Einzelbilder Eᵢ; Eᵢⱼ übereinander und nebeneinander gestapelt sind, ergibt sich dann auf jeder Seitenfläche des Gebindes wieder das zuvor aufgeteilte Gesamtbild. Die Kartons 1 werden dann zum sicheren Transport auf der Palette 3 entweder mit Folie eingeschlagen oder über Spannbänder miteinander verzurrt.

## Patentansprüche

1. Verfahren zum Individualisieren von Kartons durch einen Aufdruck, **gekennzeichnet durch** folgende Schritte:
a) Auswählen einer Mehrzahl von zu bedruckenden Kartonzuschnitten,
b) Auswählen mindestens einer zu bedruckenden Fläche auf je einem Kartonzuschnitt,
c) Aufteilen eines Druckbildes in eine Mehrzahl von Einzelbildern (Eᵢ; Eᵢⱼ) gleicher oder unterschiedlicher Größe,
d) Zuordnen eines jeden Einzelbildes (Eᵢ; Eᵢⱼ) zu mindestens einer Fläche auf je einem Kartonzuschnitt,
e) Bedrucken der jeweils ausgewählten Fläche mit dem zugeordneten Einzelbild (Eᵢ; Eᵢⱼ) mittels eines Tintenstrahldruckers,
f) Aufrichten und Verkleben jedes bedruckten Zuschnittteiles zu einem Karton (1),
g) Einfüllen mindestens eines Produktes in jeden aufgerichteten Karton (1),
h) Verschließen jedes befüllten Kartons (1),
i) Anordnen der verschlossenen Kartons (1) in horizontaler und vertikaler Richtung, sodass die mit jeweils einem Einzelbild bedruckten Flächen der Kartons so aneinander angrenzen, dass das Druckbild wieder vollständig sichtbar ist.

2. Verfahren nach Anspruch 1, **dadurch gekennzeichnet, dass** zusätzlich zu mindestens einem Einzelbild (Eᵢ; Eᵢⱼ) auf jede für das Einzelbild (Eᵢ; Eᵢⱼ) ausgewählte Fläche mindestens ein das in den Karton (1) eingelegte Produkt kennzeichnendes Symbol (2) aufgedruckt wird.

3. Verfahren nach Anspruch 2, **dadurch gekennzeichnet, dass** das Symbol ein Barcode ist.

4. Verfahren nach Anspruch 1, **dadurch gekennzeichnet, dass** die Farbe des zu bedruckenden Kartonzuschnitts weiß ist.

5. Verfahren nach einem der vorstehenden Ansprüche, **dadurch gekennzeichnet, dass** jeder Kartonzuschnitt so bedruckt wird, dass der aufgerichtete Karton (1) an zumindest drei Seitenflächen bedruckt ist.

## Claims

1. Method for customizing cartons by means of an overprint, **characterized by** the following steps:
a) selecting a plurality of carton blanks to be printed,
b) selecting at least one area to be printed on each carton blank,
c) dividing up a printing image into a plurality of individual images (Eᵢ; Eᵢⱼ) of equal or different size,
d) assigning each individual image (Eᵢ; Eiⱼ) to at least one area on a carton blank in each case,
e) printing the respectively selected area with the associated individual image (Eᵢ; Eᵢⱼ) by means of an inkjet printer,
f) erecting and gluing each printed blank component to form a carton (1),
g) putting at least one product into each erected carton (1),
h) closing each filled carton (1),
i) arranging the closed cartons (1) in the horizontal and vertical direction so that the areas of the cartons respectively printed with an individual image adjoin one another in such a way that the printed image is again completely visible.

2. Method according to Claim 1, **characterized in that** in addition to at least one individual image (Eᵢ; Eᵢⱼ), at least one symbol (2) identifying the product put into the carton (1) is printed onto each area selected for the individual image (Eᵢ; Eᵢⱼ).

3. Method according to Claim 2, **characterized in that** the symbol is a barcode.

4. Method according to Claim 1, **characterized in that** the colour of the carton blanks to be printed is white.

5. Method according to one of the preceding claims, **characterized in that** each carton blank is printed in such a way that the erected carton (1) is printed on at least three side surfaces.

## Revendications

1. Procédé d'individualisation de cartons par une surimpression, **caractérisé par** les étapes suivantes :
a) Sélectionner plusieurs flans de carton à imprimer,
b) Sélectionner au moins une surface à imprimer sur chaque flan de carton,
c) Subdiviser une image d'impression en plusieurs images individuelles (Eᵢ;Eᵢⱼ) de taille égale ou différente,
d) Associer chaque image individuelle (Eᵢ;Eⱼⱼ) à au moins une surface sur chaque flan de carton,
e) Imprimer sur chaque surface respectivement choisie l'image individuelle associée (Eᵢ;Eᵢⱼ), au moyen d'une imprimante à jet d'encre,
f) Mettre en forme et coller chaque partie de flan imprimée en un carton (1),
g) Remplir avec au moins un produit chaque carton (1) mis en forme,
h) Fermer chaque carton (1) rempli,
i) Disposer le carton (1) fermé, en direction horizontale et verticale, de sorte que les surfaces du carton imprimées respectivement avec une image individuelle soient de telle façon contiguës les unes aux autres que l'image d'impression soit de nouveau complètement visible.

2. Procédé selon la revendication 1, **caractérisé en ce qu'**en plus d'au moins une image individuelle (Eᵢ;Eᵢⱼ) sur chaque surface choisie pour l'image individuelle (Eᵢ;Eᵢⱼ), est apposé au moins un symbole (2) caractérisant le produit placé dans le carton (1).

3. Procédé selon la revendication 2, **caractérisé en ce que** le symbole est un code barre.

4. Procédé selon la revendication 1, **caractérisé en ce que** la couleur de flan de carton à imprimer est blanc.

5. Procédé selon l'une des précédentes revendications, **caractérisé en ce que** chaque flan de carton est imprimé de sorte que le carton (1) mis en forme est imprimé sur au moins trois faces latérales.
